# EUROPEAN PATENT APPLICATION

(11) **EP 4 378 909 A1**
(43) Date of publication of application: **05.06.2024**
(21) Application number: 22210265.9
(22) Date of filing: 29.11.2022
(51) Int. Cl.: C04B 28/04, C04B 28/06, C04B 40/00

(54) **ACCELERATORS FOR MINERAL BINDER COMPOSITIONS**

(71) Applicant: Sika Technology AG, 6340 Baar (CH)
(72) Inventor: WEIDMANN, Jürg, 8404 Winterthur (CH); ZIMMERMANN, Jörg, 8400 Winterthur (CH); JUILLAND, Patrick, 3005 Bern (CH)
(74) Representative: Sika Patent Attorneys

(57) **Abstract**

The invention relates to accelerators for mineral binder compositions, said accelerator comprising a) an aqueous suspension of calcium hydroxide, and b) at least one material I selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof. The present invention also relates to methods to accelerate mineral binder compositions with such accelerators.

## Description

### Technical Field

The invention relates to accelerators for mineral binder compositions. The present invention also relates to methods to accelerate mineral binder compositions.

### Background of the Invention

Cement is a mineral binder and is used primarily for concrete and mortar. When cement is mixed with water, it sets and hardens in a chemical process, called cement hydration. Cement hydrates formed thereby act as binders for the aggregates in concrete and mortar - typically sand, gravel, and stones - to form a solid material. There are many applications of mortar or concrete in which rapid setting and hardening and thus a rapid development of strength is very important.

There exist various methods to accelerate the setting and/or hardening of cement. A very common approach is to add accelerators such as calcium chloride, calcium nitrite or sodium nitrite and/or amines, such as alkanolamines. Some accelerators are known to especially influence the setting of mineral binders, while others are known to influence the hardening and lead to an increased early strength and/or late strength of mineral binder compositions.

Many accelerators for mineral binder compositions are known from the prior art. For example, EP 3 536 677 (Yara International) disclose the use of nitrates as setting and hardening accelerators and US 4 337 094 (Euclid Chem) discloses the combined use of nitrates and alkanolamines. The use of calcium formate and thiocyanate as an accelerator for Portland cement is known for example from DE 2 611 419 (Degussa). A combination of thiocyanate and alkanolamine is disclosed in US 4 373 956 (Martin Marietta). WO 2010/026155 (Construction Research & Technology) discloses calcium silicate hydrates as accelerators for mineral binder compositions.

A particularly useful accelerator for mineral binder compositions is calcium hydroxide. Aqueous suspensions of calcium hydroxide and their use as accelerators for mineral binder compositions are known from WO 2019/180191 (Sika Technology).

Known accelerators for mineral binder compositions cannot always increase the early strength and the late strength at the same time. In addition, it would be desirable to have accelerator compositions that increase early and late strength of both, mineral binders essentially consisting of Portland cement as well as mineral binders based on blended cements, such as limestone cements, slag cements or mixtures of Portland cement with other supplementary cementitious materials.

There is thus a continued need for improved accelerator compositions and for methods to accelerate mineral binder compositions, especially mineral binder compositions based on blended cements.

### Summary of the Invention

It is an object of the present invention to provide accelerators for mineral binder compositions. Especially accelerators of the present invention should improve the early strength of mineral binder compositions when compared to the same mineral binder compositions without the accelerator. Early strength refers to the strength, especially the compressive strength, measured within 1 - 24 hours after addition of water to the mineral binder composition. In particular, accelerators of the present invention should improve the early strength of blended cements.

It is also an object of the present invention to provide methods for the acceleration of mineral binder compositions, especially of mineral binder compositions based on blended cements.

Surprisingly, these objectives were solved by an accelerator and by a method as claimed in the independent claims.

Preferred embodiments of the present invention are the subject matter of dependent claims.

### Ways for carrying out the Invention

In a first aspect the present invention relates to an accelerator for mineral binder compositions, said accelerator comprising
a) an aqueous suspension of calcium hydroxide, and
b) at least one material **I** selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof.

The acceleration of a mineral binder composition is measurable as an increase in strength, especially in compressive strength, of a mineral binder composition when measured at a given point of time after hardening has started and compared to the same mineral binder composition but without the accelerator added.

Acceleration can also be measured as a decrease in setting time.

The mineral binder composition can be a mineral binder such as cement or a binder comprising cement. The mineral binder composition can also be a formulated product such as a dry mortar or wet mortar or a concrete.

A mineral binder composition thus is characterized in that it comprises at least one mineral binder. A mineral binder within the present context especially is a cement. A mineral binder composition may comprise further materials commonly used in the concrete or mortar industry. Especially, a mineral binder composition may comprise fillers, aggregate, and admixtures.

An "aqueous suspension" in the present context is a suspension of particles in a continuous liquid phase which comprises or essentially consists of water. Specifically, the continuous liquid phase apart from water comprises no other solvents such as alcohols, glycols or ketones, for example. The liquid phase may comprise surfactants.

Very preferably, the calcium hydroxide is present in the aqueous suspension in the form of suspended nanoparticles. "Nanoparticles" are particles with a particle size in the nanometer range. These ultrafine particles are notable for a very high specific surface area and consequently for specific properties. "Nanoparticles" in the present document refer to particles which have a particle size of below 1 µm. The particle size of nanoparticles in suspension can be measured by dynamic light scattering with photon cross-correlation spectroscopy according to standard ISO 22412:2017.

Within the present context, the average particle size corresponds in particular to the D50 value (50% of the particles are smaller than the specified value, 50% are correspondingly larger). Accordingly, a value "D10" indicates the particle size at which 10% of the particles are smaller than this value. A value "D90" indicates the particle size at which 90% of the particles are smaller than this value.

According to embodiments, an accelerator of the present invention is characterized in that the aqueous suspension comprises calcium hydroxide in the form of nanoparticles, especially calcium hydroxide with a particle size D90 of below 800 nm, preferably below 600 nm, more preferably below 400 nm, especially below 200 nm, measured by dynamic light scattering with photon cross-correlation spectroscopy according to standard ISO 22412:2017.

For the present purpose, the particle size of the calcium hydroxide particles has been determined using the Nanophox instrument from Sympatec, Germany. In this case the particle size is determined by dynamic light scattering with photon cross-correlation spectroscopy.

Suspensions which comprise calcium hydroxide particles having particle sizes as defined above are particularly storage-stable and very effective in the acceleration of mineral binder compositions, especially of cementitious compositions.

According to embodiments, at least 50 w%, preferably at least 66 w%, more preferably at least 90 w%, especially essentially all of the calcium hydroxide present in the aqueous suspension is in the form of suspended nanoparticles.

According to preferred embodiments, the aqueous suspension additionally comprises at least one organic compound for stabilizing the suspension. The at least one organic polymer comprising carboxylate groups, sulfate groups, sulfonate groups, phosphate groups and/or phosphonate groups. The organic polymer preferably also acts as a plasticizer for mineral binder compositions, especially for cementitious compositions. Examples of suitable organic polymers include lignosulfonates, sulfonated naphthalene-formaldehyde condensates, sulfonated melamine-formaldehyde condensates, sulfonated vinyl copolymers, poly(meth)acrylic acid, copolymers of (meth)acrylic acid with (meth)acrylic acid esters or hydroxyalkyl (meth)acrylates, polyalkylene glycols having phosphonate groups, polyalkylene glycols having phosphate groups, comb polymers having anionic groups and polyether side chains, or salts thereof, or mixtures of these polymers.

The organic polymer is more particularly a comb polymer comprising a polymer backbone having polyalkylene oxide side chains and anionic groups bonded to the backbone. The side chains here are bonded to the polycarboxylate backbone in particular by way of ester, ether, imide and/or amide groups. The comb polymer preferably comprises polyalkylene oxide units, more particularly polyethylene oxide units.

Aqueous suspensions of calcium hydroxide preferably are obtained as described in WO 2019/180191 (Sika Technology).

The at least one material I is selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof.

Alkanolamines are amines with at least one pendant hydroxyalkyl group. Preferred alkanolamines are monoethanolamine, diethanolamine, diisopropanolamine, triethanolamine (TEA), isopropanolamine, triisopropanolamine (TIPA), N-methyldiethanolamine (MDEA), N-methyldiisopropanolamine (MDIPA), ethyldiisopropanolamine (EDIPA), diethanolisopropanolamine (DEIPA), tetrahydroxyethylethylenediamine (THEED), and tetrahydroxyiso-propylethylenediamine (THIPD). Especially preferred alkanolamines are triethanolamine (TEA), triisopropanolamine (TIPA), and N-methyldiethanolamine (MDEA).

Suitable organic acids especially are formic acid, acetic acid, propionic acid, caprylic acid, laurylic acid, linolic acid, linoleic acid, myristic acid, oleic acid, behenic acid, benzoic acid, oxalic acid, and succinic acid.

A particularly suitable material **I** is a mixture of sodium nitrate and alkanolamine, especially of sodium nitrate and triethanolamine (TEA), triisopropanolamine (TIPA), or N-methyldiethanolamine (MDEA).

Another particularly suitable material **I** is a mixture of sodium nitrate and sodium thiocyanate.

Another particularly suitable material **I** is a mixture of sodium nitrate, calcium nitrate, and sodium thiocyanate.

Another particularly suitable material **I** is a mixture of sodium nitrate, calcium nitrate, sodium thiocyanate, and alkanolamine, especially triethanolamine (TEA), triisopropanolamine (TIPA), or N-methyldiethanolamine (MDEA).

Another particularly suitable material **I** is a mixture of sodium nitrate, calcium nitrate, sodium thiocyanate, formic acid, and alkanolamine, especially triethanolamine (TEA), triisopropanolamine (TIPA), or N-methyldiethanolamine (MDEA).

According to embodiments, the accelerator of the present invention is in the form of a mono-component which is an aqueous suspension.

The term "mono-component" means that the aqueous suspension of calcium hydroxide also contains the at least one material **I.** Preferably, in a mono-component accelerator, the at least one material **I** is dissolved in the aqueous suspension of calcium hydroxide. In other words, a mono-component composition comprises the aqueous suspension of calcium hydroxide and the at least one material **I** in one container. Such mono-component accelerators are particularly easy to handle and dose.

According to embodiments, the accelerator of the present invention is in the form of a bi-component.

The term "bi-component" means that the aqueous suspension of calcium hydroxide and the at least one material **I** are stored in spacially separated containers and are only combined during use or very shortly before use. In such cases, the at least one material **I** can be in the form of a powder or an aqueous preparation, preferably is in the form of an aqueous solution. Such bi-component accelerators have the advantage that dosage ratios of individual components can easily be adjusted.

According to embodiments, the accelerator of the present invention is characterized in that calcium hydroxide is present in an amount of 5 - 65 w%, preferably 8 - 15 w%, and the at least one material **I** is present in an amount of 20 - 66 w%, in each case relative to the total weight of the accelerator. It is clear for the person skilled in the art that water and further additives, especially at least one organic polymer as described above, make up the accelerator to a total of 100 w%.

In case where the at least one material **I** comprises a mixture of two or more of alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, this dosage range refers to the sum of all these chemicals in such mixture.

It is possible, for an accelerator of the present invention to comprise further additives. For example, an accelerator of the present invention may comprise a set retarding additive such as a sugar, a sugar acid, or a hydroxy-carboxylic acid, especially citric acid, lactic acid, or tartaric acid. For example, an accelerator of the present invention may comprise a thickening agent such as cellulose ether, starch, modified starch, sheet silicates, or alkaline thickening polymers. For example, an accelerator of the present invention may comprise a defoamer, a biocide, a corrosion inhibitor, or a pigment.

An accelerator of the present invention may comprise further materials selected from glycols, surfactants, especially non-ionic surfactants such as alkylpolyglucosides, Gemini-surfactants, sodium laurylethersulfate, calcium stearate, silicones, alkoxylated phosphonic acid esters or alkoxylated phosphoric acid esters, 1,3-propandiol, carboxylic acids, sulphonated aminoalcohols, boric acid, salts of boric acid, borax, salts of phosphonic acid or of phosphoric acid, gluconate, iron sulphate, tin sulphate, salts of antimony, glycerol, water-absorbing substances, especially in form of a superabsorbing polymer or in form of a sheet silicate such as vermiculite, bentonite, sugars, sugar acids, sugar alcohols, tall oil, polysaccharides such as starch, diutan gum, xanthan gum, gellan gum, guar gum, welan gum or carragean, cellulose ethers, polyvinyl alcohols, proteins, especially gelatine and/or caseine, and mixtures thereof.

In another aspect, the present invention relates to a method for the acceleration of a mineral binder composition, said method comprising the steps of
1) providing a mineral binder composition,
2) providing an accelerator comprising
   a) an aqueous suspension of calcium hydroxide, and
   b) at least one material **I** selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof, and
3) mixing said mineral binder composition and said at least one material **I.**

Embodiments described above also apply to this aspect.

Especially, a particularly suitable material **I** to be used in a method of the present invention is a mixture of sodium nitrate and alkanolamine, especially of sodium nitrate and triethanolamine (TEA), triisopropanolamine (TIPA), or N-methyldiethanolamine (MDEA). Another particularly suitable material **I** to be used in a method of the present invention is a mixture of sodium nitrate and sodium thiocyanate. Another particularly suitable material **I** to be used in a method of the present invention is a mixture of sodium nitrate, calcium nitrate, and sodium thiocyanate. Another particularly suitable material **I** to be used in a method of the present invention is a mixture of sodium nitrate, calcium nitrate, sodium thiocyanate, and alkanolamine, especially triethanolamine (TEA), triisopropanolamine (TIPA), or N-methyldiethanolamine (MDEA). Another particularly suitable material **I** to be used in a method of the present invention is a mixture of sodium nitrate, calcium nitrate, sodium thiocyanate, formic acid, and alkanolamine, especially triethanolamine (TEA), triisopropanolamine (TIPA), or N-methyldiethanolamine (MDEA).

The mineral binder composition can be a mineral binder such as cement or a binder comprising cement. The mineral binder composition can also be a formulated product such as a dry mortar or wet mortar or a concrete.

A mineral binder composition thus is characterized in that it comprises at least one mineral binder. A mineral binder within the present context especially is a cement.

According to embodiments, in a method of the present invention the mineral binder composition comprises or consists of Ordinary Portland cement, blended cement, aluminate cement, and/or calcium sulfoaluminate cement.

Ordinary Portland cement especially is CEM I according to standard EN 197-1. The term "blended cement" is meant to encompass mixtures of cement, especially Portland cement, with supplementary cementitious materials such as for example limestone, pozzolanes, and latent hydraulic materials. A blended cement especially is a CEM II, CEM II, CEM IV, or CEM V according to standard EN 197-1 or CEM II or CEM VI according to standard EN 197-5. Blended cements according to other standards, for example ASTM C595, are likewise suitable. A blended cement especially is a mixture of Ordinary Portland cement with at least one of limestone, slag, fly ash, silica fume, clay (calcined or raw), trass, marl, pumice, volcanic ash, zeolitized tuff, diatomaceous earth, kiln dust, microsilica, pyrogenic silica, precipitated silica, burnt oil shale, and burnt residues of organic matter. Gypsum typically is additionally present as part of the Ordinary Portland cement or may be additionally added.

According to embodiments, in a method of the present invention the mineral binder comprises a blend of Portland cement and limestone.

A particularly suitable blended cement comprises or consists of Ordinary Portland cement, limestone, clay, preferably calcined clay, and optionally gypsum.

According to embodiments, in a method of the present invention, the accelerator is dosed in an amount to provide calcium hydroxide in an amount of 0.01 - 1.0 w%, preferably 0.1 - 0.2 w%, relative to the dry weight of the mineral binder.

According to embodiments, in a method of the present invention, the accelerator is dosed in an amount to provide the least one material **I** in an amount of not less than 0.1 w%, preferably not less than 0.44 w%, more preferably not less than 0.7 w%, relative to the dry weight of the mineral binder.

According to embodiments, in a method of the present invention the, accelerator is dosed in an amount to provide the least one material **I** in an amount of not more than 5 w%, preferably not more than 2.66 w%, relative to the dry weight of the mineral binder.

According to embodiments, the accelerator is dosed in an amount to provide calcium hydroxide in an amount of 0.01 - 1.0 w%, preferably 0.1 - 0.2 w%, and the least one material **I** in an amount of not less than 0.1 w%, preferably not less than 0.44 w%, more preferably not less than 0.7 w% and not more than 5 w%, preferably not more than 2.66 w%, relative to the dry weight of the mineral binder

Where the material **I** consists of or comprises MDEA, it is preferred that the total dosage of MDEA relative to the mineral binder is not more than 0.2 w%, more preferably not more than 0.16 w%.

Where the material **I** consists of or comprises sodium thiocyanate, it is preferred that the total dosage of sodium thiocyanate relative to the mineral binder is not more than 3.0 w%, more preferably not more than 1.5 w%.

Dosages of calcium hydroxide and/or the at least one material **I** below the lower limits as defined above typically lead to low acceleration which often is insufficient. Dosages of calcium hydroxide and/or the at least one material **I** above the upper limits as defined above typically do not lead to further increase of acceleration but increase cost, or even lead to a decrease of acceleration.

According to embodiments, in a method of the present invention the accelerator is added to the mineral binder composition before or during grinding thereof.

In this case the mineral binder composition is a dry mineral binder composition. It may advantageously be Ordinary Portland cement, a blended cement, or a component of a blended cement as defined above.

According to embodiments, in a method of the present invention the accelerator is added to the mineral binder composition together with or shortly after any mixing water.

Further advantageous embodiments of the invention are apparent from the working examples which follow.

### Examples

### Particle size by Nanophox

The particle size of the calcium hydroxide nanoparticles in aqueous suspension was determined by dynamic light scattering with photon cross-correlation spectroscopy. The instrument used for the measurement was the Nanophox from Sympatec GmbH, Germany. Aqueous suspensions were analyzed without further dilution. Prior to the measurement, the sample was homogenized with an ultrasound probe for one minute.

### Chemicals used

Unless otherwise stated, chemicals were purchased from Sigma Aldrich in high purity and used as received.

### Preparation of an aqueous suspension of calcium hydroxide

A first solution was prepared by dissolving 174.4 g of Ca(NO₃)₂ • 4H₂O (0.739 mol) and 10 g of a comb polymer (copolymer of acrylic acid and polyethylene glycol methacrylate; Mw of the polyethylene glycol: 5000 g/mol) in 82 g of water. A second solution was prepared by dissolving 59.1 g of NaOH (1.478 mol) in 220 g of water. The first solution was charged to a 1 liter round-bottom flask. Under vigorous stirring using a propeller stirrer the second solution was added via a dropping funnel over the course of 5 minutes. The resulting suspension was stirred for a further 60 minutes. The resulting suspension was purified by ultrafiltration using a polyethersulfone membrane having a 30 KDa size exclusion limit. In this procedure, the NaNO₃ was removed, and the suspension was concentrated. Thereafter the suspension was diluted with purified water to a content of Ca(OH)₂ in the form of nanoparticles of 10 w% . The resulting suspension S1 had a content of Ca(OH)₂ in the form of nanoparticles of 10 w%. The particle size D50 measured as described above was 163 nm.

### Preparation and testing of mortars

750 g of cement (CEM I 52.5R or CEM II A-LL as indicated in below tables 1 - 4), 738 g of sand (0 - 1 mm), 1107 g of sand (1 - 4 mm), and 1154 g of sand (4 - 8 mm) were dry mixed on a Hobart mixer at 25 °C for 1 minute. Then a superplasticizer (polycarboxylate ether; 1 w% relative to cement) and water was added in an amount such that a weight ratio of water to cement (w/c ratio) of 0.39 resulted. Water from the suspension S1 was taken into account for the calculation of the w/c ratio. Mixing was then continued for 30 seconds. Mixing was stopped, the mixing bowl was scrapped down and the type and amount of accelerators as indicated in below table 1 were added. Mixing was then continued for another 1 minute.

Compressive strength of the resulting mortar mixtures was tested according to standard EN 12190 on 4x4x16 cm prisms after the time indicated in the below tables 1 - 4.

**Table 1: example 1 (reference) and examples 2-5 (inventive)**

| **Example** | **1** | **2** | **3** | **4** | **5** |
|---|---|---|---|---|---|
| Cement | CEM II | CEM II | CEM II | CEM II | CEM II |
| Na(NO₃)₂ [g] | | 3.3 | 1.65 | 1.65 | 1.65 |
| Ca(NO₃)₂ | | | 3.3 | 4 | 2.7 |
| NaSCN | | | 0.2 | 0.3 | 0.7 |
| MDEA* | | | | | 0.5 |
| TEA** | | | 0.1 | | |
| HCOOH | | | | | 0.2 |
| S1*** [g] | | 15 | 7.5 | 7.5 | 7.5 |
| Compressive strength @ 6h [MPa] | 3.4 | 6.3 | 6.4 | 6.4 | 7 |
| Compressive strength @ 8h [MPa] | 10 | 19.3 | 18.2 | 16.7 | 23.4 |
| Compressive strength @ 24h [MPa] | 50.7 | 53.9 | 56.1 | 59.5 | 59.9 |

| | | | | | |
|---|---|---|---|---|---|
| * Methyldiethanolamine ** Triethanolamine *** Ca(OH)₂ suspension as described above | | | | | |

**Table 2: example 6 (reference) and examples 7 - 10 (inventive)**

| **Example** | **6** | **7** | **8** | **9** | **10** |
|---|---|---|---|---|---|
| Cement | CEM I | CEM I | CEM I | CEM I | CEM I |
| Na(NO₃)₂ [g] | | 3.3 | 1.65 | 1.65 | 1.65 |
| Ca(NO₃)₂ [g] | | | 3.3 | 4 | 2.7 |
| NaSCN [g] | | | 0.2 | 0.3 | 0.7 |
| MDEA* [g] | | | | | 0.5 |
| TEA** [g] | | | 0.1 | | |
| HCOOH [g] | | | | | 0.2 |
| S1*** [g] | | 15 | 15 | 15 | 15 |
| Compressive strength @ 6h [MPa] | 2.4 | 4.6 | 5 | 4.6 | 5.5 |
| Compressive strength @ 8h [MPa] | 6.8 | 12.4 | 13.4 | 11.7 | 12.6 |
| Compressive strength @ 24h [MPa] | 43.2 | 43.2 | 50 | 45.5 | 56.6 |

**Table 3: example 11 (reference) and examples 12 - 14 (inventive)**

| **Example** | **11** | **12** | **13** | **14** |
|---|---|---|---|---|
| Cement | CEM I | CEM I | CEM I | CEM I |
| Na(NO₃)₂ [g] | | 3.3 | 3.3 | 3.3 |
| NaSCN [g] | | | 3.8 | 18.8 |
| S1 *** [g] | | 15 | 15 | 15 |
| Compressive strength @ 6h [MPa] | 2.9 | 5.3 | 6.7 | 6.1 |
| Compressive strength @ 8h [MPa] | 8.2 | 14.4 | 16.6 | 15.2 |
| Compressive strength @ 24h [MPa] | 43.7 | 44.8 | 48 | 48 |

**Table 4: example 15 (reference) and examples 16 - 19 (inventive)**

| **Example** | **15** | **16** | **17** | **18** | **19** |
|---|---|---|---|---|---|
| Cement | CEM II | CEM II | CEM II | CEM II | CEM II |
| Na(NO₃)₂ [g] | | 3.3 | 3.3 | 3.3 | 3.3 |
| MDEA* [g] | | | 0.5 | 0.75 | 1.25 |
| S1 *** [g] | | 15 | 15 | 15 | 15 |
| Compressive strength @ 6h [MPa] | 3.6 | 5.5 | 6.3 | 6.6 | 7.1 |
| Compressive strength @ 8h [MPa] | 10.1 | 16.6 | 20.6 | 20.9 | 21.8 |
| Compressive strength @ 24h [MPa] | 53.3 | 52.6 | 56 | 58.4 | 53.6 |

It can be seen from the above examples, that accelerators according to the present invention increase the early strength of mineral binder compositions.

## Claims

1. An accelerator for mineral binder compositions, said accelerator comprising
a) an aqueous suspension of calcium hydroxide, and
b) at least one material **I** selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof.

2. The accelerator as claimed in claim 1, **characterized in that** the at least one material **I** is a mixture of sodium nitrate, calcium nitrate, and sodium thiocyanate.

3. The accelerator as claimed in claim 1, **characterized in that** the at least one material **I** is a mixture of sodium nitrate, calcium nitrate, sodium thiocyanate, and alkanolamine, especially triethanolamine (TEA), triisopropanolamine (TIPA), or N-methyldiethanolamine (MDEA).

4. The accelerator as claimed in at least one of claims 1 - 3, **characterized in that** the aqueous suspension comprises calcium hydroxide in the form of nanoparticles, especially calcium hydroxide with a particle size D90 of below 800 nm, preferably below 600 nm, more preferably below 400 nm, especially below 200 nm, measured by dynamic light scattering with photon cross-correlation spectroscopy according to standard ISO 22412:2017.

5. The accelerator as claimed in at least on of claims 1 - 4, **characterized in that** the accelerator is in the form of a mono-component which is an aqueous suspension.

6. The accelerator as claimed in at least on of claims 1 - 5, **characterized in that** the accelerator is in the form of a bi-component.

7. The accelerator as claimed in at least one of claims 1 - 6, **characterized in that** calcium hydroxide is present in an amount of 5 - 65 w%, preferably 8-15 w%, and the at least one material **I** is present in an amount of 20 - 66 w%, in each case relative to the total weight of the accelerator.

8. A method for the acceleration of a mineral binder composition, said method comprising the steps of
1) providing a mineral binder composition,
2) providing an accelerator comprising
a) an aqueous suspension of calcium hydroxide, and
b) at least one material **I** selected from alkanolamines, sodium thiocyanate, sodium nitrate, sodium nitrite, calcium nitrate, calcium silicate hydrate, sodium silicate, aluminium sulfate, sodium sulfate, sodium aluminate, alkali metal carbonates, especially lithium carbonate, alkali metal hydrogencarbonates, especially sodium hydrogencarbonate, organic acid, or mixtures thereof, and
3) mixing said mineral binder composition and said at least one material I.

9. The method as claimed in claim 8, **characterized in that** the mineral binder composition comprises or consists of Ordinary Portland cement, blended cement, aluminate cement, and/or calcium sulfoaluminate cement.

10. The method according to claim 9, **characterized in that** the mineral binder comprises a blend of Portland cement and limestone.

11. The method according to at least one of claims 8 - 10, **characterized in that** the accelerator is dosed in an amount to provide calcium hydroxide in an amount of 0.01 - 1.0 w%, preferably 0.1 - 0.2 w%, relative to the dry weight of the mineral binder.

12. The method according to at least one of claims 8 - 11, **characterized in that** the accelerator is dosed in an amount way to provide the least one material **I** in an amount of not less than 0.1 w%, preferably not less than 0.44 w%, more preferably not less than 0.7 w%, relative to the dry weight of the mineral binder.

13. The method according to at least one of claims 8 - 12, **characterized in that** the accelerator is dosed in a way to provide the least one material **I** in an amount of not more than 5 w%, preferably not more than 2.66 w%, relative to the dry weight of the mineral binder.

14. The method as claimed in at least one of claims 8 - 13, **characterized in that** the accelerator is added to the mineral binder composition before or during grinding thereof.

15. The method as claimed in at least one of claims 8 - 13, **characterized in that** the accelerator is added to the mineral binder composition together with or shortly after any mixing water.
